# EUROPÄISCHE PATENTSCHRIFT

(11) **EP 1 154 249 B1**
(45) Veröffentlichungstag und Bekanntmachung des Hinweises auf die Patenterteilung: **02.01.2004**
(21) Anmeldenummer: 01111025.1
(22) Anmeldetag: 08.05.2001
(51) Int. Cl.: G01K 1/14, G01K 15/00

(54) **Vorrichtung zur Messung von Temperaturen**
Device for measuring temperature
Dispositif pour mesurer la température

(30) Priorität: 12.05.2000 DE 20008537 U
(43) Veröffentlichungstag der Anmeldung: 14.11.2001
(73) Patentinhaber: Dr. Mennicken GmbH, 58339 Breckerfeld (DE)
(72) Erfinder: Kötting, Klaus, 58339 Breckerfeld (DE)
(74) Vertreter: Dörner, Lothar, Dipl.-Ing.

(56) Entgegenhaltungen:
- FR-A- 2 621 120
- US-A- 3 765 242
- US-A- 4 259 123
- PATENT ABSTRACTS OF JAPAN vol. 007, no. 038 (P-176), 16. Februar 1983 (1983-02-16) & JP 57 191524 A (DAIDO TOKUSHUKO KK), 25. November 1982 (1982-11-25)

## Beschreibung

Die Erfindung betrifft eine Vorrichtung zur Messung von Temperaturen in Maschinen, insbesondere Kunststoffmaschinen, mit einem Temperaturfühler, der an einer mit einer Druckfeder umgebenen Leitung angeordnet ist, die mit einem Regler oder Ausgabegerät verbunden ist und bei der im Bereich der Druckfeder eine Bajonettkappe vorgesehen ist.

Das Messen von Temperaturen stellt im Bereich der Technik ein wichtiges Kriterium zur Überprüfung der Qualität beispielsweise von Fertigungsprozessen dar. Das Gleiche gilt für die Verarbeitungstemperaturen bestimmter Materialien während des Fertigungsprozesses wie beispielsweise Stahl, Glas, Kunststoff oder dergleichen. Hierzu ist es erforderlich, die Temperatur der Materialien während des Verarbeitungsvorgangs zu messen. So wird beispielsweise bei der Verarbeitung von Kunststoffen die Temperatur innerhalb der Kunststoffmaschine gemessen. Mit Hilfe der Temperaturmessung ist feststellbar, ob sich die in der Maschine herrschenden Temperaturen noch innerhalb einer vorgegebenen Toleranzbreite bewegen. Liegen die gemessenen Werte außerhalb einer vorgegebenen Toleranzbreite, kann dies die Qualität der Produkte negativ beeinflussen.

Bei Kunststoffmaschinen erfolgt die Temperaturmessung in der Regel durch eine in der Maschine vorgesehene Bohrung, in die ein Temperaturfühler eingesetzt ist. Die Thermoleitung eines Thermoelementes oder die Anschlussleitung eines Widerstandsfühlers wird mit dem Messeingang einer Temperaturreglereinheit verbunden. Die Thermo- bzw. die Anschlussleitung ist von einer Druckfeder umgeben. Auf der Druckfeder befindet sich eine verstellbare Bajonettkappe. Der Temperaturfühler liegt mit Hilfe der Bajonettkappe unter dem Druck der Druckfeder mit seiner Messspitze an dem Boden der Bohrung fest an.

Eine solche Vorrichtung ist z.B. aus dem Dokument US-A-4 259 123 (siehe insbesondere Abbildung 3 und die entsprechende Beschreibung) bekannt. Eine ähnliche Vorrichtung, wobei anstatt der Bajonettkappe eine Schraubkappe verwendet wird, ist im Dokument FR-A-2 621 120 veröffentlicht.

Um exakte Temperaturmessungen in den Maschinen durchführen zu können, müssen die eingesetzten Temperaturfühler kalibriert sein. Der Prozess der Kalibrierung ist mit relativ großem Aufwand verbunden und muss in regelmässigen Abständen wiederholt werden. Hierzu ist es erforderlich, den Temperaturfühler aus der Kunststoffmaschine auszubauen und in der Regel extern zu kalibrieren. Die Kalibrierung erfolgt in einem sogenannten Kalibrierofen. Während der Zeit des Kalibrierens muss ein Ersatzfühler eingebaut werden. Sollte ein solcher Ersatzfühler nicht zur Verfügung stehen, ist keine kontinuierliche Temperaturmessung möglich, sodass die Kunststoffmaschine für den Zeitraum der Kalibrierung stillzulegen ist, wodurch hohe Ausfallzeiten entstehen. Dabei bedarf es für die externe Kalibrierung viel Zeit. Soll beispielsweise der jeweilige Messfühler auf drei Temperaturmesspunkte kalibriert werden, benötigt man zur Kalibrierung pro Messpunkt ca. zwei Stunden, sodass einschließlich Aus- und Einbau des Messfühlers sowie des Transports zum Kalibrierofen mindestens eine Ausfallzeit in Höhe einer Schichtdauer entstehen kann. Darüber hinaus weist die externe Kalibrierung der Messfühler den Nachteil auf, dass durch diese Kalibrierung allein der Messfühler, nicht aber die komplette Regelstrecke von Messfühler, Regler und Ausgabegerät kalibriert ist. Folglich bleibt trotz der vorstehend beschriebenen Kalibrierung die Möglichkeit einer nicht unerheblichen Ungenauigkeit hinsichtlich der Messergebnisse bestehen. Hier wird die Erfindung Abhilfe schaffen.

Das Dokument JP-A-57191524 offenbart eine Vorrichtung zur Messung von Temperaturen, wobei sowohl ein Temperaturfühler als auch ein Referenz-Thermoelement in einer gemeinsamen Haube eingefügt werden.

Der Erfindung liegt die Aufgabe zugrunde, eine Vorrichtung zur Messung von Temperaturen in Maschinen zu schaffen, bei der während der Überprüfung des Temperaturfühlers auf seine Genauigkeit hin die jeweilige Maschine nicht angehalten werden muss und kein Ersatzfühler bereit zu halten ist. Gemäß der Erfindung wird diese Aufgabe durch die Merkmale des Anspruchs 1 gelöst. Um den Temperaturfühler ist ein Referenz-Mantel-Thermoelement angeordnet, das mit einem Messgerät verbunden ist.

Mit der Erfindung ist eine Vorrichtung zur Messung von Temperaturen in Maschinen geschaffen, bei der während der Überprüfung des Temperaturfühlers auf seine Genauigkeit hin die jeweilige Maschine nicht angehalten werden muss. Dadurch fallen bei der Überprüfung des Temperaturfühlers keine Ausfallzeiten der Maschine an. Es wird vielmehr parallel zum in der Maschine arbeitenden Temperatur-Fühler eine Referenz-Messung durchgeführt.

In Weiterbildung der Erfindung ist die Verbindung zwischen Referenz-Mantel-Thermoelement und Messgerät wenigstens abschnittsweise von Thermodrähten gebildet, die von einem Mantel umgeben sind. Dadurch ist einerseits die Übertragung der gemessenen Temperatur zuverlässig möglich. Andererseits ist dadurch gewährleistet, dass beim Einführen des Mantel-Thermoelements in die Bohrung der jeweiligen Maschine das Thermoelement mit dem Boden der Bohrung zur Anlage kommt.

Vorteilhaft ist im Bereich der Druckfeder eine Spezial-Bajonettkappe vorgesehen, die parallel zu ihrer Längsmittellinie eine Fräsung aufweist. Durch diese Ausbildung ist die Möglichkeit geschaffen, die Verbindung zwischen Mantel-Thermoelement und Messgerät sicher zu führen ohne dabei die Funktion der Bajonettkappe zu behindern.

In Ausgestaltung der Erfindung weist die Spezial-Bajonettkappe eine Bohrung auf, deren Durchmesser ein auf den Temperaturfühler abgestimmtes Übermass aufweist. Hierdurch ist ein problemloses Überstreifen der Spezial-Bajonettkappe auf den Temperaturfühler möglich.

In anderer Weiterbildung der Erfindung ist an der Spezial-Bajonettkappe eine Klammer anbringbar. Mit Hilfe der Klammer ist die Verbindung zwischen Thermoelement und Messgerät an der Bajonettkappe zuverlässig gehalten.

Bevorzugt ist die Klammer eine Federklammer. Durch die federnde Wirkung der so ausgebildeten Klammer ist auf einfache Weise ein fester Sitz der Klammer auf der Bajonettkappe hervorgerufen, durch den die Verbindung zwischen Thermoelement und Messgerät besonders gut gewährleistet ist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

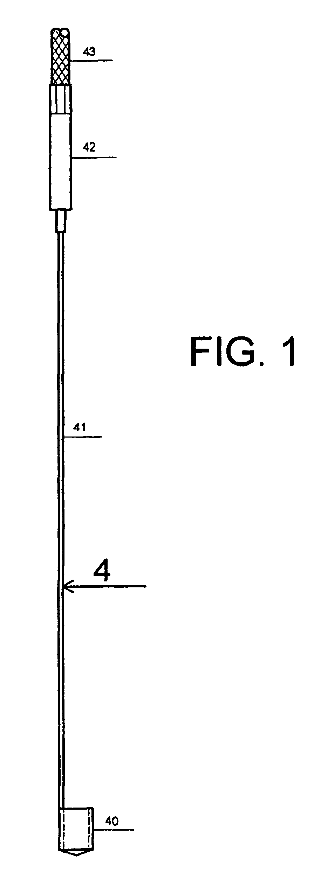

- Figur 1: ein Mantel-Thermoelement;

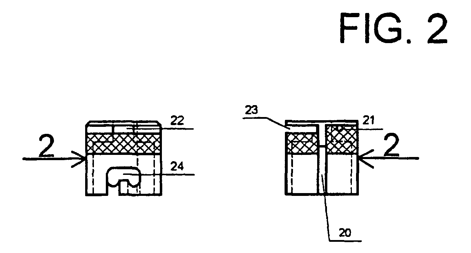

- Figur 2: eine Spezial-Bajonettkappe;

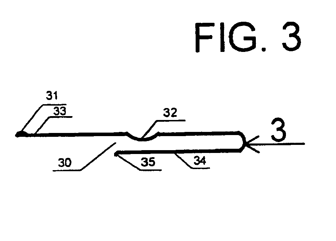

- Figur 3: eine Federklammer;
- Figur 4: einen Maschinen-Temperaturfühler;
- Figur 5: den in Figur 4 dargestellten Maschinen-Temperaturfühler, um den das in Figur 1 dargestellte Mantel-Thermoelement angeordnet ist und
- Figur 6: die in Figur 5 dargestellte Anordnung in Einbausituation einer Maschine.

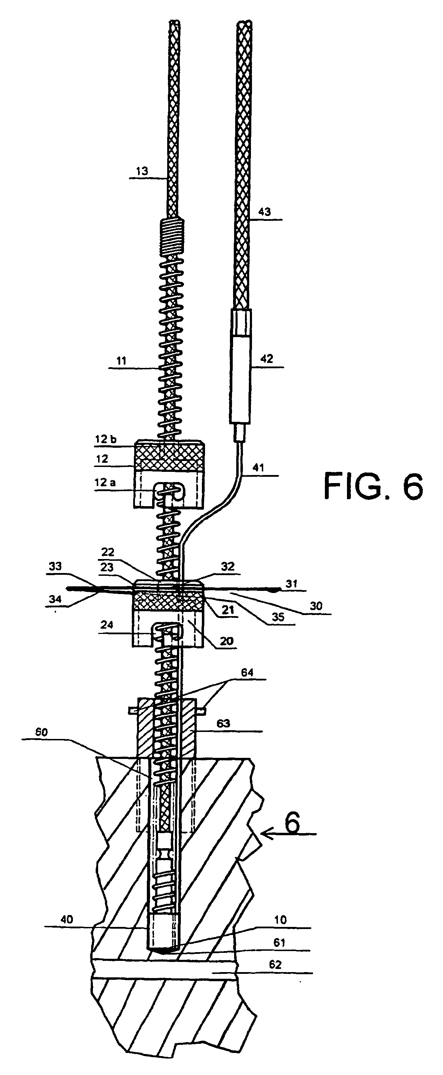

Die als Ausführungsbeispiel gewählte Vorrichtung besteht aus einem Maschinen-Temperaturfühler 1, einer Spezial-Bajonettkappe 2, einer Klammer 3 und einem Referenz-Mantel-Thermoelement 4. Für Referenzmesszwecke ist die Vorrichtung in einer Maschine 6 angeordnet (Figur 6).

Der Maschinen-Temperaturfühler 1 (nachfolgend "Temperaturfühler" genannt) weist eine Messspitze 10 auf, die an der Wärmestelle anliegt. An der Messspitze 10 ist eine Thermoleitung 13 angeschlossen, die von einer Druckfeder 11 umgeben ist. Auf der Druckfeder 11 ist eine Bajonettkappe 12 vorgesehen.

Die Bajonettkappe 12 ist auf der Druckfeder 11 verstellbar. Sie ist mit einer Federgewindebohrung 12b versehen. Der Durchmesser des Federgewindes entspricht dem Außendurchmesser der Druckfeder 11. Weiterhin ist die Bajonettkappe 12 mit einer abgewinkelten Bajonettführung 12a versehen, die zur Befestigung der Bajonettkappe 12 durch Bajonettierung auf einem Einschraubnippel 63 an der Maschine 6 dient.

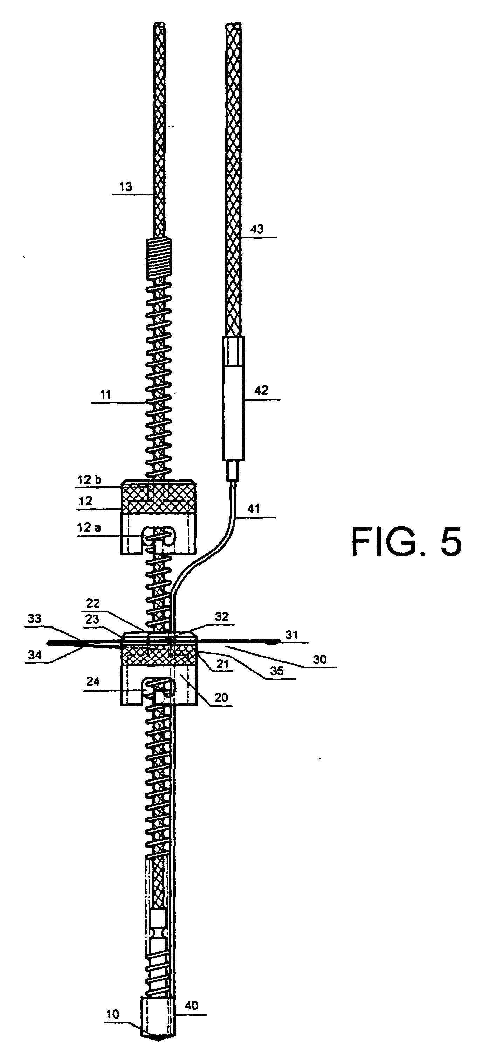

Zur Referenz-Messung ist die Messspitze 10 des Temperaturfühlers 1 in einer Aufnahme 40 des Referenz-Mantel-Thermoelements 4 angeordnet (Figur 5). An der Aufnahme 40 sind zwei gegeneinander isolierte Thermodrähte angeschlossen, die mit einem Mantel 41 umgeben sind, der im Ausführungsbeispiel aus Edelstahl besteht und gegen die Drähte isoliert ist. Die Thermodrähte bestehen im Ausführungsbeispiel aus dem Thermopaar NiCr-Ni. Der Mantel 41 ist an seiner der Aufnahme 40 abgewandten Seite mit einer zugentlastenden Übergangshülse 42 versehen, die den Übergang zu einer Thermoleitung 43 bildet. Das Referenz-Mantel-Thermoelement 4 ist mit einem - nicht dargestellten - Messgerät verbunden. Die Verbindung zwischen Referenz-Mantel-Thermoelement 4 und Messgerät erfolgt über die Thermoleitung 43.

Zur Referenzmessung ist im Bereich der Druckfeder 11 die Spezial-Bajonettkappe 2 erforderlich. Die Spezial-Bajonettkappe 2 ist vergleichbar zur Bajonettkappe 12 ausgebildet. Sie weist eine Bohrung 22 auf, deren Durchmesser ca. 0,5 mm größer als der Außendurchmesser der Druckfeder 11 ist. Sie weist folglich ein auf den Temperaturfühler 1 abgestimmtes Übermaß auf, damit ein problemloses Überstreifen möglich ist. Die Spezial-Bajonettkappe 2 ist entlang ihrer Mittellinie mit einer Längsfräsung 20 versehen. Diese Längsfräsung 20 erstreckt sich über die gesamte Länge der Spezial-Bajonettkappe 2. Es ist zudem eine Querbohrung 21 vorgesehen, die zur Aufnahme der Klammer 3 dient. Überdies dient eine Querfräsung 23 zur Verriegelung zwischen Speziaf-Bajonettkappe 2 und Druckfeder 11 mit Hilfe der einrastenden Klammer 3. Darüber hinaus weist die Spezial-Bajonettkappe zwei abgewinkelte Fräsungen 24 auf.

Im Ausführungsbeispiel handelt es sich bei der Klammer 3 um eine Federklammer. Sie weist an ihrem einen Ende eine Öse 31 zum Schutz gegen Verletzungen auf. Ein kurzer Schenkel 34 der Klammer 3 sitzt in der Bohrung 21 der Spezial-Bajonettkappe 2. Eine bleibende Verbindung der Federklammer 3 mit der Spezial-Bajonettkappe 2 ist durch eine Abwinklung 35 gewährleistet. Ein langer Schenkel 33 der Federklammer 3 liegt während des Überstreifens auf der Feder 11 des Temperaturfühlers 1 außerhalb der Querfräsung 23 der Spezial-Bajonettkappe 2. Zur richtigen Positionierung rastet der lange Schenkel 33 in der Querfräsung 23 zur Arretierung ein. Eine Einbuchtung 32 der Federklammer 3 dient zum verstärkten Halt der Spezial-Bajonettkappe 2 bei erhöhtem Federdruck während des Kalibrierungsvorgangs. Ein Lösen der Spezial-Bajonettkappe 2 kann einerseits durch Verschieben der Klammer 3, andererseits durch Spreizen der Schenkel 33 und 34 zueinander erfolgen, wodurch jeweils die Einbuchtung 32 außer Eingriff mit der Druckfeder 11 gebracht wird.

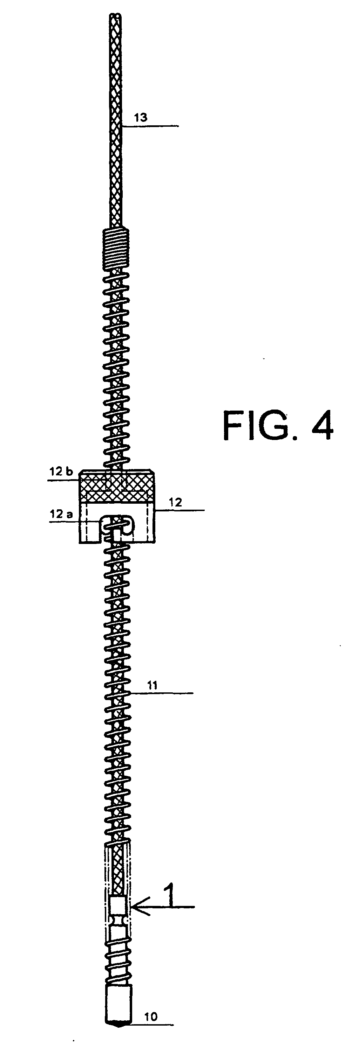

Zur kontinuierlichen Messung der Temperaturen in der Maschine 6 ist die Vorrichtung, wie sie in Figur 4 dargestellt ist, in der Maschine 6 angeordnet. Hierzu ist der Temperaturfühler 4 in eine Bohrung 60 eingeführt. In der Messposition liegt die Fühlerspitze 10 des Temperaturfühlers 1 auf dem Boden 61 der Bohrung 60 an Der Boden 61 ist in der Nähe beispielsweise eines Kanals 62 der Maschine vorgesehen, in dem das in der Maschine zu bearbeitende Material fließt bzw verarbeitet wird Durch die Nähe des Bodens 61 zum Kanal 62 kann die Temperatur des zu verarbeitenden Materials mit relativ hoher Genauigkeit gemessen werden. Um ein sicheres Anliegen der Messspitze 10 des Temperaturfühlers 1 am Boden 61 der Bohrung 60 zu gewährleisten, ist um den Ausgang der Bohrung 60 herum der Einschraubnippel 63 zur Aufnahme der Bajonettkappe 12 vorgesehen. Der Einschraubnippel 63 weist im Bereich seines freien Endes zwei Stifte 64 auf, die rechtwinklig zur Längsmittellinie der Bohrung 60 angeordnet sind.

Bei der Montage des Temperaturfühlers 4 wird dieser in die Bohrung 60 eingeführt, bis die Messspitze 10 mit dem Boden 61 in Berührung steht. Zur sicheren Fixierung wird die Bajonettkappe 12 in Richtung des der Maschine 6 abgewandten Endes gedreht. um entsprechenden Federdruck zu erreichen. Durch Aufsetzen und Verdrehen der Bajonettkappe 12 auf die Stifte 64 des Einschraubnippels 63 werden die Stifte durch die Bajonettfräsung 12a geführt. Haben die Stifte 64 die Endposition der Bajonettfräsung 12a erreicht, wird die Bajonettkappe 12 freigegeben; die Druckfeder 11 übt zwischen Bajonettkappe 12 und Messspitze 10 einen Druck auf den Temperaturfühler 1 aus, sodass dieser am Boden 61 der Bohrung 60 in der Maschine 6 unter Druck anliegt.

Zur Durchführung einer Referenzmessung wird die Bajonettkappe 12 von dem Einschraubnippel 63 gelöst. Der Temperaturfühler 1 wird aus der Bohrung 60 herausgezogen. Nach dem Herausziehen des Temperaturfühlers 1 wird die Bajonettkappe 12 in Richtung der Leitung 13 gedreht. Im Anschluss daran wird die Spezial-Bajonettkappe 2 zu Hilfe genommen und der Temperaturfühler 1 durch die Bohrung 22 geführt, sodass mit der Spezial-Bajonettkappe 2 eine zweite Bajonettkappe im Bereich der Druckfeder 11 angeordnet ist.

Nach dem Anbringen der Spezial- Bajonettkappe 2 im Bereich der Druckfeder 11 wird das Referenz-Mantel-Thermoelement 4 auf den Temperaturfühler 1 aufgesetzt. Der ummantelte Thermodraht 41 verläuft nach dem Aufsetzen im Wesentlichen parallel zur Leitung 13. Die Aufnahme 40 am Referenz-Mantel-Thermoelement 4 weist einen Außendurchmesser auf, der im Wesentlichen dem Außendurchmesser der Bohrung 60 entspricht; sie weist einen Innendurchmesser auf, der im Wesentlichen dem Außendurchmesser des Temperaturfühlers 1 entspricht. In diesem Zustand verlaufen die Thermodrähte mit Mantel 41 durch die Längsfräsung 20 der Spezial-Bajonettkappe 2 (Figur 5). Ein Verschieben der Spezial- Bajonettkappe 2 auf der Druckfeder 11 ist dadurch ohne eine Behinderung durch die Thermodrähte mit Mantel 41 möglich.

Im Anschluss daran wird die in Figur 5 dargestellte Einheit in die Bohrung 60 der Maschine 6 soweit eingeführt, bis das Referenz-Mantel-Thermoelement 4 mit seinem der Spezial-Bajonettkappe 2 abgewandten Ende am Boden 61 der Bohrung 60 anliegt. Die Spezial-Bajonettkappe 2 wird nun unterhalb der Bajonettkappe 12 in Richtung der Maschine 6 angelegt und in der oben beschriebenen Weise mit dem langen Schenkel 33 der Federklammer 3 verriegelt. Hierbei muss eventuell durch Lösen der Federklammer 3, Nachstellen und wiederholtes Verriegeln in der vorgenannten Weise eine entsprechende Korrektur des Federdrucks erreicht werden. Das Referenz-Mantel-Thermoelement 4 wird-dann mit Hilfe der Thermoleitung 43 an das - nicht dargestellte - Messgerät angeschlossen. Durch diese Anordnung ist eine Referenzmessung möglich. Die von dem Referenz-Mantel-Thermoelement 4 in dem Messgerät angezeigten Messwerte können mit den von dem Temperaturfühler 1 an dem Temperatur-Regler, -Schreiber oder -Anzeiger dargestellten Messwerten verglichen werden. Die sich aus diesen Vergleichen ergebende Differenz ist die zu dokumentierende Temperaturabweichung. Die Messdauer einer solchen Referenz-Messung beträgt bei potentialgebundenen Thermoelementen ungefähr fünf Minuten. Auf diese Weise ist die Überprüfung der Messabweichung der gesamten Regelstrecke vom Temperaturfühler 1 bis zum Temperatur-Regler oder -Schreiber oder - Anzeiger möglich. Nach Beendigung der Referenz-Messung erfolgt der Rückbau auf die ursprüngliche Messanordnung in umgekehrter Reihenfolge.

Die erfindungsgemäße Vorrichtung ist an bereits mit Maschinen-Temperatur-Fühlern 1 versehenen Maschinen anwendbar. Dabei ist es meistens nicht erforderlich, die Bohrungen in den Maschinen zu ändern; vielmehr kann die Anwendung der erfindungsgemäßen Vorrichtung mit Hilfe durchmesserkleinerer Messfühler und auf die Bohrungen in den Maschinen abgestimmten Spezial-Mantel-Thermoelementen 1 verwirklicht werden.

## Patentansprüche

1. Vorrichtung zur Messung von Temperaturen in Maschinen, insbesondere Kunststoffmaschinen, mit einem Temperaturfühler (1), der an einer mit einer Druckfeder (11) umgebenen Leitung (13) angeordnet ist, die mit einem Regler oder Ausgabegerät verbunden ist und bei der im Bereich der Druckfeder eine Bajonettkappe (12) vorgesehen ist, **dadurch gekennzeichnet, dass** um den Temperaturfühler (1) ein Referenz-Mantel-Thermoelement (4) angeordnet ist, das mit einem Messgerät verbunden ist.

2. Vorrichtung nach Anspruch 1, **dadurch gekennzeichnet, dass** die Verbindung zwischen Referenz-Mantel-Thermoelement (4) und Messgerät wenigstens abschnittsweise von Thermodrähten gebildet ist, die von einem Mantel (41) umgeben sind.

3. Vorrichtung nach Anspruch 2, **dadurch gekennzeichnet, dass** die Thermodrähte aus NiCr-Ni bestehen.

4. Vorrichtung nach einem der Ansprüche 1 bis 3, **dadurch gekennzeichnet, dass** im Bereich der Druckfeder (11) eine Spezial-Bajonettkappe (2) vorgesehen ist, die parallel zu ihrer Längsmittellinie eine Fräsung (20) aufweist.

5. Vorrichtung nach Anspruch 4, **dadurch gekennzeichnet, dass** die Spezial-Bajonettkappe (2) eine Querfräsung (23) aufweist.

6. Vorrichtung nach Anspruch 4 oder 5, **dadurch gekennzeichnet, dass** die Spezial-Bajonettkappe (2) eine Bohrung (22) aufweist, deren Durchmesser ein auf den Temperaturfühler abgestimmtes Übermaß aufweist.

7. Vorrichtung nach einem der Ansprüche 4 bis 6, **dadurch gekennzeichnet, dass** an der Spezial-Bajonettkappe (2) eine Klammer (3) anbringbar ist.

8. Vorrichtung nach Anspruch 7, **dadurch gekennzeichnet, dass** die Klammer (3) eine Federklammer ist.

## Claims

1. Device for measuring temperature in machines, in particular plastics machines, comprising a temperature sensor (1) arranged at a line (13), which is surrounded by a compression spring (11) and connected with a controller or an output device, having a bayonet cap (12) in the range of the compression spring, **characterized in that** a reference coated thermocouple (4) is arranged around the temperature sensor (1), interconnected with a measuring instrument.

2. Device for measuring temperature in machines according to claim 1, **characterized in that** the interconnection between said reference covered thermocouple (4) and said measuring instrument is at least in sections formed by thermoelectric wires, surrounded bay a coat (41).

3. Device for measuring temperature in machines according to claim 2, **characterized in that** said thermoelectric wires are made of NiCr-Ni.

4. Device for measuring temperature in machines according to one of claims 1 to 3, **characterized in that** a special bayonet cap (2) is intended within the range of the compression spring (11) having a milling (20) parallel to its longitudinal center line.

5. Device for measuring temperature in machines according to claim 4, **characterized in that** the said special bayonet cap (2) has a transverse milling.

6. Device for measuring temperature in machines according to either of claims 4 or 5, **characterized in that** the said special bayonet cap (2) has a drill hole with an overdimension adjusted to the temperature sensor.

7. Device for measuring temperature in machines according to one of claims 4 to 6, **characterized in that** a clip (3) is fixable to said special bayonet cap (2).

8. Device for measuring temperature in machines according to claim 7, **characterized in that** the said clip (3) is a spring clip.

## Revendications

1. Dispositif pour mesurer la température dans les appareils, en particulier les appareils de matière plastique, avec une sonde thermométrique (1) qui est disposée à une conduite (13) entourée avec un ressort à pression (11) qui est liée à un régulateur ou à l'élément de sortie et lors de laquelle dans le secteur du ressort à pression un chapeau de baïonnette (12) est prévu **caractérisé en ce qu'**autour de la sonde thermométrique (1), un thermocouple de couche de référence (4) qui est lié à un instrument de mesure est disposé.

2. Dispositif pour mesurer la température dans les appareils suivant la revendication 1, **caractérisé en ce que** la relation entre le thermocouple de couche de référence (4) et l'instrument de mesure est formée au moins par sections par les fils qui sont entourés d'une couche (41) .

3. Dispositif pour mesurer la température dans les appareils suivant la revendication 2, **caractérisé en ce que** les fils se composent des NiCr-Ni.

4. Dispositif pour mesurer la température dans les appareils suivant l'une des revendications 1 á 3, **caractérisé en ce que** dans le secteur du ressort à pression (11), un chapeau de baïonnette spécial (2) qui montre parallèlement son axe central longitudinal un moulage(20) est prévu.

5. Dispositif pour mesurer la température dans les appareils suivant la revendication 4, **caractérisé en ce que** e chapeau de baïonnette spécial (2) montre un moulage transversal (23).

6. Dispositif pour mesurer la température dans les appareils suivant l'une des revendications 4 ou 5, **caractérisé en ce que** le chapeau de baïonnette spécial (2) montre un forure (22) dont le diamètre montre un coté majoré harmonisé avec la sonde thermométrique.

7. Dispositif pour mesurer la température dans les appareils suivant l'une des revendications 4 á 6, **caractérisé en ce qu'**il faut attacher au chapeau de baïonnette spécial, une parenthèse (3).

8. Dispositif pour mesurer la température dans les appareils suivant la revendication 7, **caractérisé en ce que** la parenthèse (3) est une agrafe à ressort.
